# EUROPÄISCHE PATENTANMELDUNG

(11) **EP 1 775 508 A2**
(43) Veröffentlichungstag der Anmeldung: **18.04.2007**
(21) Anmeldenummer: 06009122.0
(22) Anmeldetag: 03.05.2006
(51) Int. Cl.: F16L 13/14, F16L 33/207

(54) **Verbindungsanordnung für Rohre**

(30) Priorität: 11.10.2005 DE 202005016258 U
(71) Anmelder: IPA Produktions- und Vertriebsges.m.b.H., 3163 Rohrbach (AT)
(72) Erfinder: Ogris, Bernhard, Dipl.-Ing., 2511 Pfaffstätten (AT)
(74) Vertreter: Schwabe - Sandmair - Marx

(57) **Zusammenfassung**

Die vorliegende Erfindung betrifft eine Verbindungsanordnung für Rohre, mit einer Stützhülse (12), auf welche ein Rohr aufgeschoben werden kann, mit einer Presshülse, die im Bereich der Stützhülse über das Rohr geschoben wird und mit einem Anschlagring (14), der von der Stützhülse getrennt, jedoch an dieser festgelegt ist.

## Beschreibung

Die vorliegende Erfindung betrifft eine Verbindungsanordnung für Rohre und insbesondere für Kunststoffrohre gemäß dem Anspruch 1. Bevorzugt können auch Metall-Kunststoff-Metall-Verbundrohre mit der erfindungsgemäßen Verbindungsanordnung angeschlossen werden.

Im Stand der Technik ist es üblich, Pressverbindungen unterschiedlichster Art einzusetzen, um insbesondere Kunststoffrohre und bevorzugt Verbundrohre zu einem Leitungssystem zusammenzuschließen. Dabei wird ein Rohrende auf eine Stützhülse eines Verbindungskörpers aufgeschoben. Am Ende der Stützhülse des Verbindungskörpers ist ein Anschlagabschnitt vorgesehen, der massiv ausgebildet ist. Auf der anderen Seite des Anschlagkörpers kann eine weitere Stützhülse anschließen oder aber es kann ein Gewindeanschluss vorgesehen sein, oder dgl. mehr. Eine Presshülse, die in der Regel genauso zylindrisch ist, wie die Stützhülse bzw. das aufzuschiebende Rohr, wird über die Stützhülse mit dem aufgeschobenen Rohrende geschoben. Die Presshülse wird anschließend verpresst, wobei Material des Rohres in Nuten, Rillen oder dgl., die als Halte- bzw. Dichtstruktur auf der Stützhülse vorgesehen sind, hingetrieben wird, um das Rohr gegen axial einwirkende Abzugskräfte abzusichern. In einer Fortentwicklung ist die Presshülse entweder am Anschlagkörper des Verbindungskörpers unmittelbar festgelegt worden, oder es wurde ein Kunststoffring vorgesehen, der am Anschlagabschnitt des Verbindungskörpers festgelegt wurde, um die Presshülse an dem Verbindungskörper bzw. der Stützhülse vormontiert festzuhalten.

Jedenfalls wurde im Stand der Technik eine Art von Verbindungskörper mit einem sehr massiv ausgebildeten Anschlagring gefertigt und zum Einsatz gebracht. Beispiele im Stand der Technik sind beispielsweise aus folgenden Schriften bekannt: DE 297 01 223 U, DE 43 04 680 C1 und DE 44 41 373 A1

Es ist demgegenüber eine Aufgabe gemäß der vorliegenden Erfindung, eine Verbindungsanordnung vorzuschlagen, die relativ Material unaufwändig und leicht ausgebildet werden kann.

Ferner ist es eine Aufgabe gemäß der Erfindung eine relativ leichte Verbindungsanordnung vorzuschlagen, die dennoch mechanisch stabil ist.

Wenigstens eine dieser Aufgaben wird wenigstens überwiegend durch eine Verbindungsanordnung mit den Merkmalen des Anspruchs 1 gelöst. Zweckmäßige Ausführungsformen der erfindungsgemäßen Verbindungsanordnung sind in den Unteransprüchen definiert.

Die gemäß der Erfindung zu erzielenden Vorteile beruhen darauf, dass eine Verbindungsanordnung für Rohre und insbesondere Kunststoffrohre und Metall-Kunststoff-Metallverbundrohre vorgeschlagen wird, die wenigstens eine Stützhülse aufweist, auf welche ein Rohr aufgeschoben werden kann wobei das Rohrende mit einer Presshülse festgelegt werden kann, die im Bereich der Stützhülse über das Rohr aufschiebbar ist, wobei ein separater jedoch an der Stützhülse festgelegter Anschlagring vorgesehen ist.

Der Anschlagring, der zwar auch aus Metall, vorzugsweise jedoch aus Kunststoff gefertigt sein kann, lässt sich einfach herstellen und kann die gleichen Funktionen ausüben, wie ein Anschlagabschnitt einer herkömmlichen Verbindungsanordnung, die verpresst wird. Der Anschlagring ermöglicht es, bis zu 25 % an Materialeinsparung bei der Herstellung der Verbindungsanordnung zu erzielen und dementsprechend eine Kostenreduktion sowie eine Gewichtsreduktion zu verwirklichen.

Im einfachsten Falle könnte beispielsweise aus einem Metallrohr eine entsprechende Verbindungsanordnung durch eine abspanende Bearbeitung ausgebildet werden, da im Gegensatz zum Stand der Technik ein weit überstehender Anschlagbereich oder auch Bundabschnitt benötigt wird.

Vorteilhafterweise umfasst die Stützhülse einen Aufnahmeabschnitt, insbesondere eine Nut oder Ringnut, wobei mit diesem Aufnahmeabschnitt der Anschlagring in Eingriff bringbar ist. Der Anschlagring gemäß der Erfindung kann auf die Stützhülse bzw. an deren Ende in Eingriff gebracht werden, beispielsweise in eine Ringnut eingeschnappt werden, um seine Funktion als Anschlag zu erfüllen. Dabei ist in Betracht zu ziehen, dass ein Anschlagabschnitt oder Bundbereich gleich nach dem Verpressen des Rohres an der Verbindungsanordnung praktisch ohne Funktion ist. Einen massiven Anschlag- oder Bundbereich aus massivem Material, beispielsweise Messing oder Stahl, vorzusehen, ist folglich prinzipiell unnötig, wurde jedoch im Stand der Technik unbeirrt zum Einsatz gebracht, obwohl die Verwendung eines einfachen Anschlagringes überraschenderweise weder zu einem Stabilitätsverlust noch zu sonstigen Nachteilen, dafür aber zu bemerkenswerten Einsparungen fuhrt. Vorteilhafterweise umfasst der Anschlagring einen radial einwärts erstreckenden Eingriffsabschnitt, der in dem Aufnahmeabschnitt zum Eingriff bringbar ist. Dieser Eingriffsabschnitt sollte federnde Eigenschaften aufweisen, d.h., er sollte sich über einen Bereich mit einem größeren Durchmesser der Stützhülse schieben lassen, um dann in den Aufnahmeabschnitt, etwa einer Ringnut, der Stützhülse einzugreifen, um mit der Stützhülse fest verbunden zu sein. Natürlich ist es auch möglich, den Eingriffsabschnitt, entsprechend korrespondierend zum Aufnahmeabschnitt andersartig auszubilden, beispielsweise indem ein radial einwärts erstreckter oder mehrere radial einwärts erstreckte Fortsätze vorgesehen werden, die in die Oberfläche der Stützhülse an den der Aufschubseite für das Rohr abgewandten Ende in Eingriff bringbar sind.

Dabei ist es bevorzugt, dass der Eingriffsabschnitt wenigstens einen Federabschnitt umfasst, der aus seiner Ursprungslage auslenkbar ist und in diese wieder zurückschnellt, sobald eine Eingriffsposition erreicht ist.

Vorteilhafterweise umfasst der Anschlagring einen Halteabschnitt für die Presshülse, die gleichermaßen wie der Anschlagring zylindersymmetrisch ausgebildet sein kann. Ein solcher Halteabschnitt ist prinzipiell bekannt, ist ansonsten aber lediglich in der Form eines Halteringes für die Presshülse vorgesehen, nicht aber in der Form eines Anschlagringes, der als Anschlag für die Stirnseite des aufzuschiebenden bzw. aufgeschobenen Rohres dient.

Wird der Anschlagring aus Kunststoff gefertigt, kann er auch an die Stützhülse angespritzt werden.

Nachfolgend wird die vorliegende Erfindung unter Bezugnahme auf die beigefügten Figuren näher erläutert, wobei weitere Merkmale gemäß der Erfindung sowie Zielsetzungen und Vorteile offenbart werden.

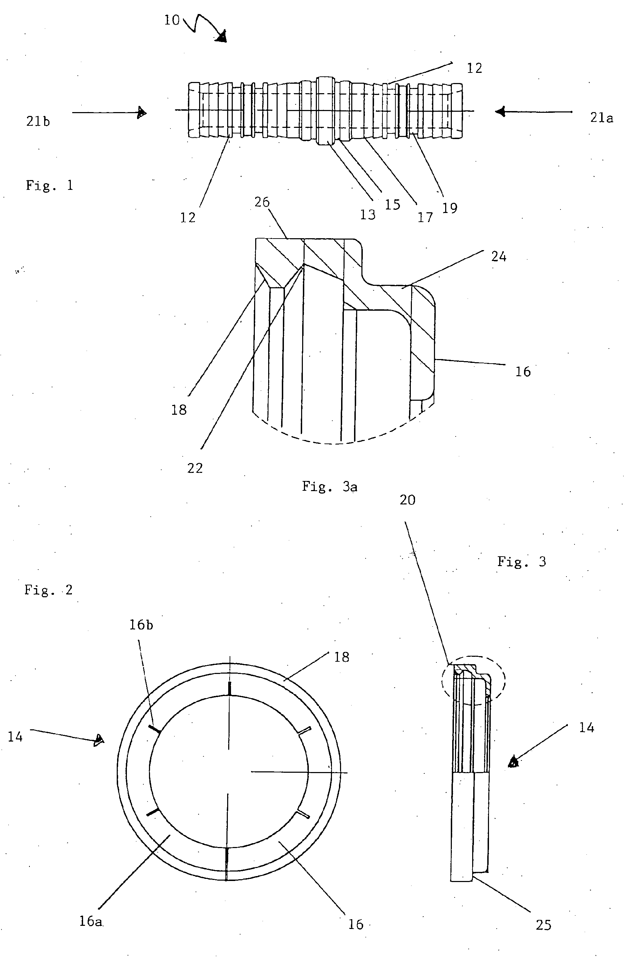

In Fig. 1 ist eine als Kupplung ausgebildete Verbindungsanordnung 10 dargestellt, die zwei Stützhülsen 12 umfasst, die durch einen Zwischenbereich 13 getrennt sind. Dieser Zwischenbereich 13 kann prinzipiell beliebig schmal ausgebildet sein. Er muss lediglich die Ausbildung eines Eingriffsabschnittes bzw. Festlegungsabschnittes und insbesondere eines Aufnahmeabschnittes 15 in der Form einer Ringnut oder Nut ermöglichen. Eine Stützhülse 12 weist an ihrem Ende einen Führungsabschnitt 17 auf, über den das stirnseitige Ende des Rohres gegen einen Anschlagring 14 gemäß der Erfindung (siehe Figuren 2 bis 3a) gegen geführt werden kann. Natürlich kann dieser Aufschubendbereich 17 auch mit einer Stufe versehen sein, die einen Anschlag für den Innendurchmesser des Rohres bilden kann. Hier kann ein galvanischer Kontakt zwischen einer Metallschicht eines Verbundrohres und dem Verbindungskörper bzw. einer Presshülse (nicht dargestellt) verhindert werden.

Die Stützhülse 12 kann auch mit Dichtungsaufnahmenuten 19 versehen sein, die zur Aufnahme von Dichtelementen, beispielsweise einer O-Ringdichtung oder einer im Querschnitt trapezförmig ausgebildeten Dichtung bestimmt sind. Jeweilige Rohrenden (nicht dargestellt) werden in Aufschubrichtungen 21 a, 21b auf die jeweiligen Stützhülsen 12 aufgeschoben, bis sie beispielsweise gegen die bereits angeordneten Anschlagringe 14 anlaufen.

In Fig. 2 ist ein Anschlagring 14 dargestellt, der einen Eingriffsabschnitt 16 aufweist. Der Eingriffsabschnitt 16 ist mit Deformationsfugen 16b versehen, so dass einzelne Federabschnitte 16a entstehen, die beim Aufschieben auf eine Stützhülse 12 axial zur Stützhülse ausgelenkt werden können, um dann in den Aufnahmeabschnitt 15 hinein zu expanieren, um den Anschlagring auf der Stützhülse 12 festzulegen. Das Bezugszeichen 18 bezieht sich auf die einem Rohr zugewandte Stirnseite. Unter diese Stirnseite 18 kann eine Presshülse geschoben werden, um die Presshülse vormontiert auf dem Verbindungskörper bzw. der Stützhülse 12 zu halten.

In Fig. 3 ist ein Anschlagring 14 teilweise in einem Querschnitt und teilweise in einer Seitenansicht zu sehen. Ein Bereich 20 des querschnittlich dargestellten Profils des Anschlagringes 14 ist im Detail in Fig. 3a dargestellt. Der Anschlagring 14 weist eine Durchmesserreduktionsstufe 25 auf, die gemäß Fig. 24 als axial erstreckter Übergang dargestellt ist, der als Stabilisierungsbereich 24 zum Einsatz kommt. D.h., die Durchmesserreduktionsstufe 25 und damit der Stabilisierungsbereich 24 dienen prinzipiell lediglich zur stabilisierenden Überleitung zwischen dem äußeren Durchmesser 26 des Anschlagringes 14 und dem inneren Durchmesser und damit der Kontaktfläche zwischen den Federabschnitten 16a des Eingriffsabschnitts 16. Dieser Bereich ist einer statischen Stabilisierung des Anschlagringes gewidmet.

Im einfachsten Falle könnte der Anschlagring lediglich als Scheibe ausgebildet sein, d.h., diese Scheibe könnte sich ausgehend von dem Eingriffsabschnitt 16 bzw. dem Federabschnitt 16a nur radial auswärts erstrecken, wobei die konstruktiven Elemente 18 bis 24 weggelassen werden könnten.

Diese Bereiche können jedoch auch vorgesehen werden, um nicht nur zur mechanischen Stabilisierung, sondern auch zur Erfüllung weiterer Funktionen zu dienen.

So kann noch ein Halteabschnitt 22 vorgesehen sein, der ein stirnseitiges Ende einer Presshülse aufnehmen kann, um die Presshülse in einer vormontierten Stellung an der Stützhülse 12 bzw. am Verbindungskörper 10 zu halten. Die Stirnfläche 18 kann abgeschrägt sein, um das Einfädeln und damit Einschieben der Presshülse in ihre gehaltene Lage im Halteabschnitt 22 zu begünstigen.

### Bezugszeichenliste

- 10: Verbindungskörper
- 12: Stützhülse, zylindrische Stützhülse
- 13: Zwischenbereich
- 14: Anschlagring
- 15: Aufnahmeabschnitt, Ringnut, Nut
- 16: Eingriffsabschnitt
- 16a: Federabschnitt
- 16b: Deformationsfuge
- 17: Aufschubendbereich
- 18: Stirnfläche
- 19: Dichtungsaufnahmenut
- 20: Teilschnitt
- 21 a, 21 b: Rohraufschubrichtung
- 22: Halteabschnitt
- 24: Stabilisierungsbereich
- 25: Durchmesserreduktionsstufe

## Patentansprüche

1. Verbindungsanordnung für Rohre
- mit einer Stützhülse (12), auf welche ein Rohr aufgeschoben werden kann,
- mit einer Presshülse, die im Bereich der Stützhülse über das Rohr geschoben wird,
- mit einem Anschlagring (14), der von der Stützhülse getrennt, jedoch an dieser festgelegt ist.

2. Verbindungsanorndung nach Anspruch 1, **dadurch gekennzeichnet, dass** die Stützhülse einen Aufnahmeabschnitt (15), insbesondere eine Nut, hat, mit der der Anschlagring in Eingriff bringbar ist.

3. Verbindungsanordnung nach einem der Ansprüche 1 oder 2, **dadurch gekennzeichnet, dass** der Anschlagring (14) einen radial einwärts erstreckten Eingriffsabschnitt aufweist, der in den Aufnahmeabschnitt zum Eingriff bringbar ist.

4. Verbindungsanordnung nach einem der Ansprüche 1 bis 3, **dadurch gekennzeichnet, dass** der Eingriffsabschnitt wenigstens einen Federabschnitt (16a) hat.

5. Verbindungsanordnung nach einem der Ansprüche 1 bis 4, **dadurch gekennzeichnet, dass** der Anschlagring (14) einen Halteabschnitt (22) für die Presshülse aufweist.

6. Verbindungsanordnung nach einem der Ansprüche 1 bis 5, **dadurch gekennzeichnet, dass** der Anschlagring aus Kunststoff gefertigt ist.

7. Verbindungsanordnung nach Anspruch 6, **dadurch gekennzeichnet, dass** der Anschlagring angespritzt ist.
